# EUROPÄISCHE PATENTSCHRIFT

(11) **EP 2 451 707 B1**
(45) Veröffentlichungstag und Bekanntmachung des Hinweises auf die Patenterteilung: **02.05.2018**
(21) Anmeldenummer: 10723141.7
(22) Anmeldetag: 14.06.2010
(51) Int. Cl.: B64D 11/00

(54) **VERFAHREN ZUR REDUZIERUNG DER EINBAUZEIT EINER VERSORGUNGSKANALEINHEIT**
METHOD FOR REDUCING THE INSTALLATION TIME OF A SUPPLY DUCT UNIT
PROCÉDÉ DE RÉDUCTION DE LA DURÉE DE MONTAGE D'UN ELEMENT D'UN CANAL D'ALIMENTATION

(30) Priorität: 07.07.2009 DE 102009032078; 07.07.2009 US 223487 P
(43) Veröffentlichungstag der Anmeldung: 16.05.2012
(73) Patentinhaber: Airbus Operations GmbH, 21129 Hamburg (DE)
(72) Erfinder: LANDES, Benjamin, 22527 Hamburg (DE); NITSCHE, Anja, 21075 Hamburg (DE)
(74) Vertreter: LKGLOBAL Lorenz & Kopf PartG mbB Patentanwälte
(86) Internationale Anmeldenummer: PCT/EP2010/058307
(87) Internationale Veröffentlichungsnummer: WO 2011/003697

(56) Entgegenhaltungen:
- DE-A1-102006 061 455
- DE-A1-102007 030 331
- US-A- 3 330 506

## Beschreibung

Die vorliegende Anmeldung beansprucht die Priorität der deutschen Patentanmeldung 10 2009 032 078.4, eingereicht am 7. Juli 2009 und der US-Provisional Application 61/223,487, eingereicht am 7. Juli 2009.

### GEBIET DER ERFINDUNG

Die Erfindung betrifft ein Verfahren zur Reduzierung der Installationszeit einer Versorgungskanaleinheit. an einer Haltestruktur in einem Luftfahrzeug. Des Weiteren betrifft die Erfindung ein Luftfahrzeug mit Kabinenbauteilen, die gemäß dem oben genannten Verfahren installiert sind.

### HINTERGRUND DER ERFINDUNG

Bei dem Zusammenbau von Luftfahrzeugen spielt die Zusammenbauzeit eine wichtige Rolle. Angesichts der Komplexität und der Vielfalt der unterschiedlichen Bauteile muss viel Zeit bei der Endmontagelinie (Final Assembly Line, FAL) investiert werden. Ein hoher Zeitaufwand bei der Endmontage führt auch zu erhöhten Kosten.

Insbesondere die Montage von Kabinenbauteilen, die in mehrfacher Ausführung in die Kabine eingebaut werden sollen und, die alle einzeln, individuell und komplex verdrahtet werden müssen führt zu einer Erhöhung des Zeitaufwandes.

Beispielsweise ist es notwendig bei der Installation von Passagier-Versorgungskanälen (Passenger Supply Channel, PSC) an Gepäckablageeinheiten (Overhead Stowage Compartment, OHSC), wie sie Beispielsweise aus der DE 10 2007 030 331 A1 und der parallelen Anmeldung WO 2009 003 945 A1 bekannt sind, zunächst die Gepäckablageeinheiten mit Kabelüberlängen zu versehen und anzubringen. Anschließend müssen die Gepäckablageeinheiten im Flugzeug verdrahtet und angebracht werden. Die Kabelüberlängen sind notwendig, da die genaue Positionierung der Versorgungskanaleinheiten, die unter den Gepäckablageeinheiten angeordnet werden sollen, nicht hinreichend bekannt und unabhängig von der Position der Gepäckablageeinheiten ist. Somit können die einzelnen Versorgungskanalelemente nicht immer an der gleichen Position in Bezug zu den Gepäckablageeinheiten montiert werden. Dadurch ergeben sich unterschiedliche Abstände beispielsweise zwischen Anschlüssen in den Gepäckablageeinheiten und den Anschlüssen bzw. Kabeln der Versorgungskanalelemente.

Nach der Installation der Gepäckablageeinheiten müssen die einzelnen Versorgungskanalelemente entsprechend unter den Gepäckablageeinheiten positioniert und die Kabel Schritt für Schritt verlegt und verdrahtet werden. Dieses Vorgehen kostet enorm viel Zeit.

Eine Möglichkeit diesen Zeitaufwand zu verringern wäre die Anfertigung von individuellen Einbauzeichnungen zumindest für jede einzelne Gepäckablageeinheit und eventuell für jedes einzelne darunter anzuordnende Versorgungskanalelement. Diese Alternative führt jedoch zu einem erhöhten Arbeits- und Kostenaufwand.

US 3,330,506 beschreibt eine Serviceeinheit, die longitudinal im Flugzeug an einer Schiene mit Löcher verschoben werden kann. DE 10 2006 061 455 A1 offenbart eine Personal Service Unit, die an einer Schiene mit einem elektrischen Leiter befestigt wird.

### ZUSAMMENFASSUNG DER ERFINDUNG

Es kann daher als eine Aufgabe der Erfindung angesehen werden, ein verbessertes Verfahren bereitzustellen, welches eine Verringerung der Installationszeit einer Versorgungskanaleinheit ermöglichen kann.

Diese Aufgabe kann durch den Gegenstand der Erfindung gemäß den unabhängigen Ansprüchen gelöst werden. Ausführungsformen der Erfindung sind in den abhängigen Ansprüchen beschrieben.

Gemäß einem ersten Aspekt der Erfindung wird ein Verfahren zur Reduzierung der Installationszeit einer Versorgungskanaleinheit mit einem elektrischen Verbraucher an einer Gepäckablageeinheit in einem Luftfahrzeug beschrieben. Das Verfahren weist die folgenden Schritte auf: Vorverdrahten einer Gepäckablageeinheit mit einer ersten Haltestruktur außerhalb des Luftfahrzeugs und Installieren einer Versorgungskanaleinheit im Luftfahrzeug an einer durch die erste Haltestruktur vordefinierten, standardisierten Einbauposition.

Anders ausgedrückt basiert die Idee der Erfindung gemäß dem ersten Aspekt auf einer Vorgabe der Einbauorte für die Versorgungskanaleinheiten durch eine Haltestruktur. Die Haltestruktur ist eine an einer Gepäckablage angeordnete Rasterschiene. Durch die Haltestruktur werden die Einbauorte für die Versorgungskanaleinheiten also so vorgegeben, dass eine Standardisierung bewirkt wird. Die Position der Versorgungskanaleinheiten ist also nun direkt mit der Position der Gepäckablageeinheiten verlinkt bzw. von ihr abhängig.

Dank der Standardisierung sind die Einbauorte der Versorgungskanaleinheiten bekannt. Somit können die Gepäckablageeinheiten bereits außerhalb des Luftfahrzeugs vorverdrahtet werden. Womit Kabelüberlängen an den Versorgungskanaleinheiten überflüssig werden.

Durch das Vorverdrahten der Gepäckablageeinheiten kann zum einen eine Gewichtsreduzierung erreicht werden, die sich in dem Wegfallen von Kabelüberlängen begründet. Ferner wird durch das Vorverdrahten außerhalb des Luftfahrzeugs Arbeitsaufwand und wertvolle Arbeitszeit bei der Endmontage gespart.

Des Weiteren kann dank der Installation der Versorgungskanaleinheit an standardisierten Einbauorten auch die Verdrahtung bzw. die Vorverdrahtung der Gepäckablageeinheiten standardisiert werden. Dies führt ebenfalls zu einer Verringerung des Zeitaufwands. Auch der Zeitaufwand bei der Wartung von Versorgungskanaleinheiten kann sich durch eine Standardisierung der Verdrahtung reduzieren.

Ferner führt die Standardisierung zu der Möglichkeit einer genaueren Dokumentation und Qualitätskontrolle der Verdrahtung und des Einbauvorgangs. Dies kann im Gegensatz zur früheren Vorgehensweise, bei der lediglich Richtlinien für eine Kabelverlegung vorlagen und Interpretation bei der Verlegung und der anschließenden Kontrolle nötig waren, durch einen Vergleich der Ausführung mit exakten Vorgaben geschehen.

Die erwähne Zeiteinsparung gemäß dem beschriebenen Verfahren kann ferner ohne eine Erhöhung der Gesamtkosten erreicht werden.

Im Folgenden werden Merkmale, Einzelheiten und mögliche Vorteile einer Vorrichtung gemäß Ausführungsformen der Erfindung im Detail diskutiert.

Gemäß dem Verfahren wird die Installationszeit für einen Versorgungskanal reduziert. Die Installationszeit kann einer Zeit entsprechen, die im Rahmen einer Endmontage eines Versorgungskanals aufgewendet wird.

Ein Versorgungskanal (Passenger Supply Channel, PSC) ist ein Kanal, der unter den Gepäckablagen über den Sitzen der Passagiere angeordnet sein kann. In den Versorgungskanal können Versorgungskanaleinheiten (Passenger Supply Units, PSU) eingefügt werden. In der Versorgungskanaleinheit können sich beispielsweise Ausgabegeräte wie digitale Anzeigen (zum Beispiel für "Fasten Seatbelt" und "No Smoking") und Bildschirme zum Beispiel von Fernsehgeräten zur Unterhaltung der Passagiere befinden. Ferner können sich in der Versorgungskanaleinheit Leuchtelemente für Individualbeleuchtung, Individualbelüftungen, Serviceknöpfe beispielsweise zum Rufen einer Stewardess, und Sauerstoff (O₂)-Boxen beispielsweise mit Atemmasken, die im Falle eines Druckabfalls in der Kabine automatisch herunterfallen, befinden.

Der Versorgungskanal wird an einer ersten Haltestruktur des Luftfahrzeugs installiert. Die erste Haltestruktur kann als eine Befestigung, eine Schiene oder eine Rasterleiste ausgestaltet sein. Der Versorgungskanal kann an der ersten Haltestruktur beispielsweise eingehängt oder angeschraubt werden. Die erste Haltestruktur ist dabei ausgestaltet, mindestens ein Element, wie beispielsweise die Versorgungskanaleinheit, mit einem weiteren Element, wie beispielsweise einer Gepäckablageeinheit, zu verbinden. Anders ausgedrückt ist die erste Haltestruktur ausgestaltet, an einer Struktur des Luftfahrzeugs angeordnet zu sein und eine andere daran zu koppeln. Beispielsweise ist die erste Haltestruktur in der Gepäckablageeinheit integriert sein.

Das Luftfahrzeug kann dabei beispielsweise ein Flugzeug oder ein Helikopter sein. Ferner kann das Luftfahrzeug für die zivile oder militärische Luftfahrt ausgelegt sein. Das Luftfahrzeug kann ferner beispielsweise ein Passagier- und/oder Frachtflugzeug sein.

Das Verfahren zur Reduzierung der Installationszeit des Versorgungskanals weist den Schritt des Vorverdrahtens einer Gepäckablageeinheit außerhalb des Luftfahrzeugs auf. Das Vorverdrahten kann dabei einen Vorgang beinhalten, der das

Versehen der Gepäckablageeinheit mit Drähten, Kabeln und elektrischen Anschlüssen umfasst. Das Vorverdrahten umfasst das Anordnen, Befestigen und Herstellen notwendiger elektrischer Drähte, Kabel, Leitungen und Kontakte. Nach dem Schritt des Vorverdrahtens kann die Gepäckablageeinheit derart ausgestaltet sein, dass sie in kurzer Zeit und mit wenig Zeitaufwand eventuell ohne die Notwendigkeit weiterer Verdrahtungsschritte im Flugzeug eingesetzt werden kann.

Ferner kann die Versorgungskanaleinheit vorverdrahtet und mit Anschlüssen versehen werden. Nach dem Schritt des Vorverdrahtens kann die Versorgungskanaleinheit beispielsweise an einer vorgeschriebenen Stelle im Flugzeug zum Einrasten gebracht werden, und bereits im Augenblick des Einrastens eine Verbindung zur vorverdrahteten Gepäckablageeinheit herstellen und funktionsbereit sein. Dabei können die Schritte des Vorverdrahtens der Gepäckablageeinheit und der Versorgungskanaleinheit parallel oder aufeinanderfolgend ablaufen.

Das Vorverdrahten findet außerhalb des Luftfahrzeugs statt, was die Arbeit erleichtert, da der Raum zum Verdrahten nicht beschränkt ist, wodurch auch die Arbeit beschleunigt wird. Ferner führt das Vorverdrahten außerhalb des Luftfahrzeugs dazu, dass die Endmontage im Inneren des Flugzeugs viel schneller vonstatten gehen kann. Das Vorverdrahten kann beispielsweise in der unmittelbaren Umgebung des Luftfahrzeugs durchgeführt werden. Alternativ kann das Vorverdrahten in einer Montagehalle stattfinden und die vorverdrahteten Kabinenbauteile anschließend zum Luftfahrzeug transportiert werden.

Das Verfahren weist ferner den Schritt des Installierens der Versorgungskanaleinheit im Luftfahrzeug an einer durch die erste Haltestruktur vordefinierten standardisierten Einbauposition auf. Installieren kann dabei eine Positionierung und Montage der Versorgungskanaleinheit bedeuten. Ferner kann Installieren ein Verdrahten und ein Befestigen der Versorgungskanaleinheit mit weiteren Bauteilen des Luftfahrzeugs wie zum Beispiel der Gepäckablage umfassen. Das Installieren kann also sowohl die elektrische als auch die mechanische Installation umfassen.

Die erste Haltestruktur kann dabei als Teil der Gepäckablageeinheit oder als separates Bauteil ausgeführt sein. Ferner kann die erste Haltestruktur fest an vordefinierten Stellen mit der Gepäckablageeinheit verbunden sein, so dass beispielsweise Ausnehmungen der erste Haltestruktur immer die gleiche Position in Bezug auf die Gepäckablageeinheit haben und auf diese Weise standardisierte Einbaupositionen für die Versorgungskanaleinheiten vorgeben.

Beim Installieren gibt die erste Haltestruktur eine Einbauposition für die Versorgungskanaleinheit vor. Dies kann beispielsweise dadurch geschehen, dass die erste Haltestruktur lediglich eine Montage an ganz bestimmten Stellen zulässt. Beispielsweise kann die erste Haltestruktur als eine Schiene mit einer Rasterung ausgestaltet sein. Mit einer derartigen ersten Haltestruktur, die beispielsweise an bzw. unterhalb einer Gepäckablageeinheit angeordnet ist, kann eine Versorgungskanaleinheit immer an der gleichen Stelle in Bezug auf die Gepäckablageeinheit befestigt werden.

Eine vordefinierte Einbauposition kann dabei bedeuten, dass die erste Haltestruktur die Einbauposition zum Beispiel durch eine Lochung vorgibt. Zum Beispiel könnte die Einbauposition durch die erste Haltestruktur so vordefiniert sein, dass eine Befestigung wie beispielsweise eine Schraube 2 cm von einem linken Rand des Versorgungskanals bzw. an einer ersten Lochung der ersten Haltestruktur befestigt wird. Weitere Befestigungspunkte können ebenfalls beispielsweise durch weitere Lochungen der ersten Haltestruktur vorgegeben sein.

Die Einbauposition der Versorgungskanaleinheit ist ferner standardisiert. Dies bedeutet beispielsweise, dass die Einbauposition jeder Versorgungskanaleinheit in Bezug auf die jeweilige Gepäckablageeinheit immer gleich ist. Die Standardisierung birgt Vorteile, da sie zu Zeiteinsparung führt.

Die Einbauposition der Versorgungseinheit kann beispielsweise durch die Koordinaten der Befestigungspunkte der Versorgungskanaleinheit in Bezug zu Gepäckablageeinheiten bzw. zu weiteren Strukturelementen einer Flugzeugkabine definiert sein.

Durch das erfindungsgemäße Verfahren kann einerseits durch das Vorverdrahten der Gepäckablageeinheit außerhalb des Luftfahrzeugs und andererseits durch die Standardisierung der Einbaupositionen mittels der ersten Haltestruktur eine Verringerung der Installationszeit des Versorgungskanals erreicht werden. Eine Vorgehensweise gemäß dem beschriebenen Verfahren macht individuelle Bau- und Verkabelungspläne für die einzelnen Versorgungskanaleinheiten unnötig, erleichtert eine genauere Dokumentation der Qualitätskontrolle der Kabelverlegung möglich und verringert den Arbeitsaufwand und damit die benötigte Zeit bei der Endmontage der Versorgungskanaleinheiten.

Gemäß einer Ausführungsform der Erfindung weist die erste Haltestruktur eine Rasterschiene mit einer Perforierung auf. Dabei erfolgt das Installieren an der durch die erste Haltestruktur vordefinierten standardisierten Einbauposition mittels der Perforierung der Rasterschiene.

Die erste Haltestruktur kann als eine Rasterschiene bzw. Rasterleiste ausgeführt sein oder eine umfassen. Die Schiene kann dabei gleichmäßig unterteilt sein. D.h. die Perforierungen auf der Rasterschiene können regelmäßig angeordnet sein.

Die Perforierungen der Rasterschiene können ein Netzmuster auf der Schiene bilden oder vorzugsweise Lochungen entsprechen, die in gleichem Abstand entlang der Längsachse der Schiene angeordnet sind. Eine Perforierung kann dabei eine Ausnehmung oder vorzugsweise eine Durchbohrung bzw. Lochung der Schiene an einer bzw. an zwei Seiten der Schiene darstellen. Vorzugsweise befindet sich gegenüber jeder Lochung auf der einen Seite der Schiene eine Lochung auf der anderen Seite der Schiene.

Das Installieren der Versorgungskanaleinheit findet mittels der Perforierung der Rasterschiene statt. Das heißt, die Perforierung der Rasterschiene legt die Befestigungsorte der Versorgungskanaleinheit eindeutig fest.

Die Rasterschiene kann beispielsweise unterhalb einer Gepäckablageeinheit angeordnet sein. In die Rasterschiene bzw. an der Rasterschiene entlang kann dann ein Befestigungselement der Versorgungskanaleinheit geführt werden, bis die Einraststelle bzw. Befestigungsstelle erreicht ist.

Durch den Einsatz einer Rasterschiene zum Installieren der Versorgungskanaleinheit kann eine Standardisierung der Einbauposition der Versorgungskanaleinheit in Bezug auf die Gepäckablageeinheiten erreicht werden. Dies vereinfacht den Montagevorgang und spart Zeit bei der Final Assembly Line (FAL).

Gemäß einer weiteren Ausführungsform der Erfindung weist die Perforierung eine Lochung mit gleichem Abstand entlang der Längsachse der Rasterschiene auf.

Die Lochung kann beispielsweise mehrere Durchbohrungen der Schiene eventuell auch auf gegenüberliegenden Seiten der Schiene bedeuten. Die Lochungen sind in gleichem Abstand angeordnet, das heißt beispielsweise dass die Mittelpunkte der Lochungen jeweils die gleiche Distanz in Bezug aufeinander aufweisen.

Eine Lochung mit gleichem Abstand entlang der Längsachse der Rasterschiene trägt dazu bei, die Installation des Versorgungskanals zu standardisieren und somit die Installationszeit zu verringern.

Gemäß einer weiteren Ausführungsform der Erfindung ist die Vorverdrahtung der Gepäckablageeinheit standardisiert.

Standardisiert kann dabei bedeuten, dass der Schritt der Vorverdrahtung für alle Gepäckablageeinheiten und eventuell auch Versorgungskanaleinheiten identisch abläuft. Beispielsweise kann durch eine einzige Verdrahtungszeichnung bzw. Verdrahtungsprotokoll (Wire Installation Guide, WIG) die Vorverdrahtung aller Gepäckablageeinheiten und eventuell durch eine weitere Verdrahtungszeichnung die Vorverdrahtung aller Versorgungskanaleinheiten definiert sein. Darin kann beispielsweise der Verlauf und die Verdrahtung von Kabeln und die Positionen von Verbindungen bzw. Steckverbindungen und ihre Verkabelung festgelegt sein. Ferner kann das Verdrahtungsprotokoll beispielsweise die Biegeradien der Kabel bzw. Drähte angeben.

Durch die Standardisierung der Vorverdrahtung der Gepäckablageeinheit kann beispielsweise durch Vermeiden von individuellen Verdrahtungs- und Installationszeichnungen für die jeweilige Gepäckablageeinheit Arbeitsaufwand und Zeit bei der Installation des Versorgungskanals, also beispielsweise beim Anbringen der Versorgungskanaleinheiten an den Gepäckablageeinheiten, eingespart werden.

Gemäß der Erfindung weist die Versorgungskanaleinheit einen elektrischen Verbraucher auf. Das Verfahren weist dabei ferner den folgenden Schritt auf: Herstellen einer elektrischen Verbindung automatisch zwischen dem elektrischen Verbraucher und einer Versorgungsleitung des Luftfahrzeugs während dem Bewegen der Versorgungskanaleinheit auf die vordefinierte standardisierte Einbauposition.

Elektrische Verbraucher können dabei beispielsweise Ausgabegeräte wie digitale Anzeigen und Bildschirme sein. Alternativ können elektrische Verbraucher Leuchtelemente für die Individualbeleuchtung der Passagiere, Lüftungseinheiten, Serviceknöpfe und Sauerstoffboxen sein.

Das Verfahren zur Reduzierung der Installationszeit eines Versorgungskanals an einer ersten Haltestruktur weist ferner den Schritt des automatischen Herstellens einer elektrischen Verbindung zwischen dem elektrischen Verbraucher und einer Versorgungsleitung des Luftfahrzeugs auf. Automatisch kann dabei bedeuten, dass die elektrische Verbindung ohne die Notwendigkeit eines zusätzlichen menschlichen Zutuns hergestellt wird. Das heißt, die Verbindung kann hergestellt werden, ohne dass ein Elektriker sein Können einsetzen müsste.

Die elektrische Verbindung wird beispielsweise im Laufe eines anderen Vorgangs automatisch hergestellt, nämlich während dem Bewegen der Versorgungskanaleinheit auf die vordefinierte standardisierte Einbauposition. Dabei kann beispielsweise beim Einrasten der Versorgungskanaleinheit an der vorgesehenen Stelle unter einer Gepäckablageeinheit auch eine Steckverbindung an der Versorgungskanaleinheit in eine dafür vorgesehene Buchse in der Gepäckablageeinheit einrasten bzw. ein Kontakt mit ihr herstellen.

Eine elektrische Verbindung kann dabei die Herstellung einer Leitung für einen elektrischen Strom, der über diese Kontaktstelle fließen kann, sein. Die elektrische Verbindung kann beispielsweise durch einen Einpresskontakt, Lötungen, Verschweißungen oder Klemmen zwischen zwei elektrischen Leitern und vorzugsweise durch einen Steckverbinder bzw. Stecker hergestellt werden.

Die Versorgungsleitung des Luftfahrzeugs kann eine elektrische Leitung sein, die die einzelnen Komponenten des Luftfahrzeugs mit Energie versorgt. Die Versorgungsleitung kann mit einer Energiequelle wie beispielsweise einer Brennstoffzelle verbunden sein.

Durch das automatische Herstellen einer elektrischen Verbindung beim Installieren der Versorgungskanaleinheit kann zusätzliche wertvolle Zeit gespart werden.

Gemäß einer weiteren Ausführungsform der Erfindung weist das Verfahren ferner den folgenden Schritt auf: Herstellen einer mechanischen Verbindung automatisch zwischen der Versorgungskanaleinheit und der ersten Haltestruktur während dem Bewegen der Versorgungskanaleinheit auf die vordefinierte standardisierte Einbauposition.

Die mechanische Verbindung kann dabei beispielsweise eine kraftschlüssige oder vorzugsweise formschlüssige Verbindung sein. Beispiele für kraftschlüssige mechanische Verbindungen sind Keile, Klemmen oder Schrauben. Für die Herstellung einer automatischen mechanischen Verbindung können formschlüssige Verbindungen von Vorteil sein. Beispiele für formschlüssige mechanische Verbindungen sind Passfedern, Zahnräder, Verstiftungen oder vorzugsweise Schnappverbindungen (Click & Snap Verbindungen).

Die mechanische Verbindung wird automatisch beim Bewegen der Versorgungskanaleinheit auf die vordefinierte standardisierte Einbauposition zu hergestellt. Dabei kann die mechanische Verbindung beispielsweise durch Einrasten von Halteelementen an der Versorgungskanaleinheit in vorgegebene Stellen an der ersten Haltestruktur erfolgen. Die Halteelemente können beispielsweise als Schnappverbindungen ausgeführt sein.

Das automatische Herstellen einer mechanischen Verbindung bei der Installation der Versorgungskanaleinheit spart ebenfalls wertvolle Zeit.

Gemäß einer weiteren Ausführungsform der Erfindung weist das Verfahren ferner den folgenden Schritt auf: Bereitstellen einer elektrischen Steckverbindung an der Versorgungskanaleinheit zum elektrischen Anschluss der Versorgungskanaleinheit an eine Versorgungsleitung des Luftfahrzeugs.

Die Steckverbindung kann Stecker, Buchsen, Kupplungen und Steckdosen aufweisen. Die elektrische Steckverbindung kann einen männlichen und/oder weiblichen Teil aufweisen. Der männliche Teil der elektrischen Steckverbindung, also beispielsweise ein Stecker, kann an der Versorgungskanaleinheit angeordnet sein. Der weibliche korrespondierende Teil, also beispielsweise eine Kupplung oder eine Buchse, können an entsprechender Stelle an der Gepäckablageeinheit angeordnet sein. Alternativ können beide Teile der elektrischen Steckverbindung an der Versorgungskanaleinheit in Form eines Connectors angeordnet sein. Bei dieser Ausführungsform kann der elektrische Connector beim mechanischen Einrasten der Versorgungskanaleinheit mit elektrischen Kontakten an der Gepäckablageeinheit in Kontakt kommen und dadurch eine elektrische Verbindung herstellen.

Das Bereitstellen einer elektrischen Steckverbindung kann eine eventuelle Wartungsarbeit an der Versorgungskanaleinheit und ihren Bestandteilen und Kabeln erleichtern, und dadurch Zeit bei der Wartung sparen.

Gemäß einer weiteren Ausführungsform der Erfindung weist die Versorgungskanaleinheit eine Zuführung für sauerstoffhaltige Luft für einen Passagier auf. Dabei weist das Verfahren ferner den folgenden Schritt auf: Herstellen einer Sauerstoffversorgungsverbindung automatisch zwischen der Zuführung für sauerstoffhaltige Luft und einer entsprechenden Versorgungsleitung des Luftfahrzeugs während dem Bewegen der Versorgungskanaleinheit auf die vordefinierte, standardisierte Einbauposition.

Die sauerstoffhaltige Luft kann dabei beispielsweise Luft sein, die mit Sauerstoff angereichert wird, wie dies für die Bereitstellung von Atemluft bei Druckabfall vorgesehen ist. Die Zuführung für sauerstoffhaltige Luft kann beispielsweise mit einer Sauerstoffbox in Verbindung stehen. Die Sauerstoffbox kann dabei beispielsweise mit Atemmasken versehen sein, die im Falle eines Druckabfalls in der Kabine automatisch herunterfallen und von einem Passagier auf Mund und Nase angezogen werden können.

Die automatische Herstellung einer Sauerstoffversorgungsverbindung kann mit Hilfe einer mechanischen Steckverbindung geschehen. Beispielsweise kann dabei ein Verbindungselement, welches an der Versorgungskanaleinheit angeordnet ist, beim Bewegen der Versorgungskanaleinheit auf die vordefinierte standardisierte Einbauposition zu über die Lippen einer Versorgungsleitung an einer Gepäckablageeinheit gestülpt werden. Die entsprechende Versorgungsleitung für sauerstoffhaltige Luft kann beispielsweise direkt oder indirekt mit einer Brennstoffzelle in Verbindung stehen.

Gemäß einer weiteren Ausführungsform der Erfindung weist das Verfahren ferner die folgenden Schritte auf: Installieren der Gepäckablageeinheit im Luftfahrzeug an einem durch eine zweite Haltestruktur vordefinierten, standardisierten Einbauort.

Die Gepäckablageeinheit kann bereits vor der Installation der Versorgungskanaleinheit ebenfalls an vordefinierten, standardisierten Einbauorten stattfinden. Die Einbauorte können dabei durch eine zweite Haltestruktur vorgegeben sein.

Die zweite Haltestruktur kann dabei eine weitere Rasterschiene oder Leiste sein. Alternativ können die Einbauorte für die Gepäckablageeinheit durch eine so genannte simulierte Schiene definiert sein. Eine simulierte Schiene kann dabei beispielsweise aus Spanten eines Flugzeugs bestehen, die im gleichen Abstand zu einander angeordnet sind und dadurch eine genaue Position vorgeben können.

Durch eine derartige Standardisierung der Installation der Gepäckablageeinheit wird zusätzlich Zeit bei der Endmontage eingespart. Der Schritt des Installierens der

Versorgungskanaleinheit kann auf den Schritt des Installierens der Gepäckablageeinheit im Luftfahrzeug folgen. Dabei kann nach dem Installieren der Gepäckablageeinheit bzw. bereits bei dem Vorverdrahten der Gepäckablageeinheit eine erste Haltestruktur wie beispielsweise eine Rasterschiene unter der Gepäckablageeinheit angeordnet werden. An dieser ersten Haltestruktur orientiert sich dann die Installation der Versorgungskanaleinheit.

Gemäß einer weiteren Ausführungsform der Erfindung weist das Verfahren ferner den folgenden Schritt auf: Installieren der Versorgungskanaleinheit an der Gepäckablageeinheit. Dabei ist die erste Haltestruktur an der Gepäckablageeinheit angeordnet.

Gemäß einem zweiten Aspekt der Erfindung wird ein Luftfahrzeug mit Kabinenbauteilen beschrieben, die entsprechend dem oben beschriebenen Verfahren installiert sind.

Weitere Merkmale und Vorteile der Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

### KURZE BESCHREIBUNG DER FIGUREN

- Fig. 1: zeigt schematisch ein Verfahren zur Installation eines Versorgungskanals gemäß einem Ausführungsbeispiel der Erfindung
Fig. 2 zeigt schematisch eine Seitenansicht von installierten Versorgungskanaleinheiten und Gepäckablageeinheiten, die gemäß einem Ausführungsbeispiel der Erfindung installiert wurden
Fig. 3 zeigt schematisch einen Querschnitt durch erfindungsgemäß installierte Versorgungskanaleinheiten und Gepäckablageeinheiten mit einer Rasterschiene
Fig. 4 zeigt schematisch die Verdrahtung erfindungsgemäß installierter Versorgungskanaleinheiten und Gepäckablageeinheiten
Fig. 5 zeigt schematisch die alternative Anordnung der elektrischen Verbindung zwischen der Versorgungskanaleinheit und einer Versorgungsleitung über der Gepäckablageeinheit
Fig. 6a zeigt schematisch ein Ausführungsbeispiel einer erfindungsgemäßen Verdrahtung eines Versorgungskanals
Fig. 6b zeigt schematisch ein Ausführungsbeispiel einer erfindungsgemäßen Verdrahtung eines Versorgungskanals ohne die Umgebungsgeometrie

Alle Figuren sind lediglich schematische Darstellungen von erfindungsgemäßen Verfahren, erfindungsgemäß installierter Vorrichtungen und ihrer Bestandteile. Insbesondere Abstände und Größenrelationen sind in den Figuren nicht maßstabsgetreu wiedergegeben. In den verschiedenen Figuren sind gleiche oder identische Elemente mit den gleichen Referenznummern versehen.

### DETAILLIERTE BESCHREIBUNG VON AUSFÜHRUNGSFORMEN

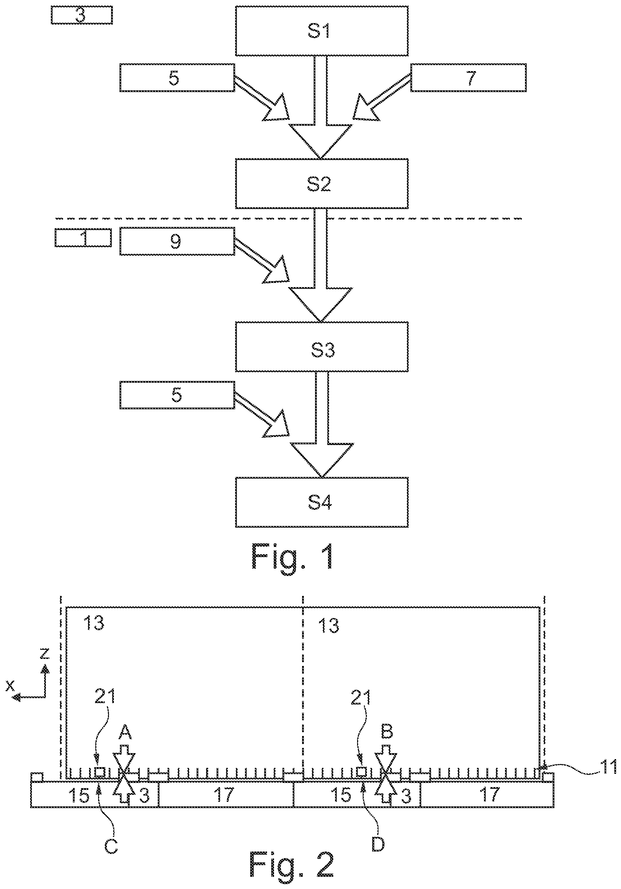

In Fig. 1 ist schematisch ein Verfahren zur Installation eines Versorgungskanals gemäß einem Ausführungsbeispiel der Erfindung dargestellt.

Die Schritte S1 und S2 finden dabei außerhalb 3 des Luftfahrzeugs statt und die Schritte S3 und S4 finden im Inneren 1 des Luftfahrzeugs statt. Schritt S1 beinhaltet das Bereitstellen von Gepäckablageeinheiten 13 mit Kabelüberlänge. Zusätzlich kann Schritt S1 auch das Bereitstellen von Versorgungskanaleinheiten 15 mit keiner bzw. einer sehr geringen Kabelüberlänge umfassen.

Schritt S2 umfasst das Vorverdrahten der einzelnen Gepäckablageeinheiten 13 und Versehen der Gepäckablageeinheiten 13 mit elektrischen Verbindungselementen (Connector) 21. Eine Bereitstellung von Kabelüberlängen an den Gepäckablageeinheiten 13 und eine entsprechende Vorverdrahtung ist lediglich dank dem erfindungsgemäßen Verfahren möglich, da nun die genaue Position der Versorgungskanaleinheiten 15 unter der Gepäckmoduleinheiten 13 vorhergesagt werden kann. Ferner kann Schritt S2 das Vorverdrahten der einzelnen Versorugungskanaleinheiten 15 umfassen, falls hierfür Bedarf besteht. Beispielsweise kann bei der Versorgungskanaleinheit 15 eine Kabelschlaufe angebracht werden, die an einer Seite, zum Beispiel an einer linken oder einer rechten Kante, herunterhängt und kann in Schritt S4 an mit einem Stecker, also zum Beispiel dem elektrischen Verbindungselement 21 verbunden werden. Zusätzlich kann dabei ein Kabel-Clip an der Versorgungskanaleinheit 15 bzw. an dem Versorgungskanal-Panel 23 angeordnet werden.

Das Vorverdrahten in Schritt S2 kann mit Hilfe eines so genannten Vorverdrahtungsplans 7 (Wire Installation Guide, WIG) erfolgen. Dabei ist der Vorverdrahtungsplan 7 standardisiert und für jede einzelne Gepäckablageeinheit 13 und eventuell auch für jede Versorgungskanaleinheit 15 gültig. Mit anderen Worten ist eine Vorverdrahtung der Gepäckablageeinheiten 13 ohne individuelle Einbaupläne bzw. Zeichnungen pro Gepäckablageeinheit dank einer genauen Bestimmung der Einbauposition (aufgrund des PSC Plotter-Plans 5 in Kombination mit dem WIG 7) möglich.

Ferner wird bei dem Vorverdrahten der einzelnen Gepäckablageeinheiten 13 ein Versorgungskanal-Plotter-Plan (PSC Plotter-Plan) 5 verwendet. Der Versorgungskanal-Plotter-Plan kann dabei die Positionen der einzelnen Versorgungskanaleinheiten 15 entlang der Rasterschiene, wie in Fig. 2 dargestellt, angeben.

Im Inneren 1 des Luftfahrzeugs findet Schritt S3 statt, der die Installation der vorverdrahteten Gepäckablageeinheiten 13 mit Verbindungselementen umfasst. Bei der Installation der vorverdrahteten Gepäckablageeinheiten 13 können individuelle Gepäckablageeinheit-Installationszeichnungen 9 verwendet werden.

Im Schritt S4 werden Versorgungskanaleinheiten 15 an den Gepäckablageeinheiten 13 installiert. Dies findet ebenfalls im Inneren 1 des Luftfahrzeugs statt. Die Installation der Versorgungskanaleinheiten 15 muss ebenfalls unter Einsatz des Versorgungskanal-Plotter-Plans 5 (wie in Fig. 2 dargestellt) erfolgen.

Der Verdrahtungsplan 7 kann dabei beispielsweise für unterschiedliche Luftfahrzeugtypen und unterschiedliche Ausführungsformen von Gepäckablageeinheiten 13 und Versorgungskanaleinheiten 15 gültig sein. Insbesondere gilt ein einzelner Verdrahtungsplan 7 vorzugsweise für alle Gepäckablageeinheiten 13 und eventuell Versorgungskanaleinheiten 15 innerhalb eines Luftfahrzeugs.

Der Verdrahtungsplan 7 kann dabei die Position jedes elektrischen Verbindungselements 21 entlang der Rasterschiene beinhalten. Der Verdrahtungsplan 7 kann dies beispielsweise in Form von einer oder mehrerer Zeichnungen beinhalten. Ferner kann der Verdrahtungsplan 7 beinhalten, wie der Kabelverlauf und die Biegeradien der Kabel innerhalb einer Versorgungskanaleinheit 15 aussehen. Dabei können beispielsweise die Positionen von Kontakten und Kabelklemmen angegeben werden.

Der Versorgungsplan 7 kann sowohl bei der ersten Installation als auch bei Wartungsschritten gültig sein. Die erfindungsgemäße Vorgehensweise führt zu enormen Zeiteinsparungen bei der Endmontage der Kabinenbauteile 13, 15. Dies wird vor allem durch eine Vorverdrahtung der Kabinenbauteile 13, 15 außerhalb 1 des Flugzeugs ermöglicht. Ferner wird eine bedeutende Zeiteinsparung dadurch erreicht, dass individuelle Bau- und Verkabelungspläne für die einzelnen Bauteile unnötig werden.

Ferner kann somit gemäß dem erfindungsgemäßen Verfahren bei der Installation von Gepäckablageeinheiten 13 mit Versorgungskanaleinheiten 15 eine Standardisierung und somit eine Zeiteinsparung erreicht werden. Beispielsweise kann bei der Endmontage einer einzelnen Versorgungskanaleinheit eine Zeiteinsparung von etwa 60 % erreicht werden.

Ein weiterer Vorteil der erfindungsgemäßen Vorgehensweise kann darin gesehen werden, dass eine Wartung wesentlich erleichtert werden kann, da die einzelnen Versorgungskanaleinheiten 15 und Sauerstoffboxen 17 entfernt werden können ohne dabei die umliegenden Versorgungskanal-Panels 23 ausbauen zu müssen. Dies begründet sich damit, dass die Versorgungskanaleinheiten 15 keine Kabelüberlängen aufweisen, die in den Bereich der benachbarten Versorgungskanal-Panels 23 reichen könnten.

In Fig. 2 ist schematisch eine Seitenansicht von installierten Versorgungskanaleinheiten 15 und Gepäckablageeinheiten 13 dargestellt, die gemäß einem Ausführungsbeispiel der Erfindung installiert wurden. Die Seitenansicht ist in der x-z-Ebene dargestellt. Sie stellt also beispielsweise, eine Ansicht dar, wie sie sich einem Passagier bieten würde, der aus dem Gang zwischen den Sitzen von vorne auf die Gepäckablageeinheiten 13 schaut.

In Fig. 2 ist der so genannte Versorgungskanal-Plotter-Plan 5 dargestellt, aus dem ersichtlich sein kann, an welcher Rasterposition sich jede einzelne Versorgungskanaleinheit 15 angeordnet werden soll bzw. angeordnet ist. Zwei Gepäckablageeinheiten 13 mit einer Rasterschiene 11 sind nebeneinander angeordnet. An der Rasterschiene 11 werden die Versorgungskanaleinheiten 15 angeordnet. Eine Versorgungskanaleinheit 15 kann beispielsweise an der Rasterposition Nr. 7 bezeichnet mit A installiert bzw. befestigt werden. Eine zweite Versorgungskanaleinheit 15 kann beispielsweise an einer Rasterposition Nr. 34 bezeichnet mit B installiert werden.

Durch die genaue Definition der Positionen der Versorgungskanaleinheit 15 unter der Gepäckablageeinheit 13 ist eine Position eines Verbindungselements 21 implizit definiert. Die exakte Definition findet sich in dem Verdrahtungsplan 7 und ist gültig für jede Gepäckmoduleinheit 13 in jedem Luftfahrzeug. Beispielsweise befindet sich das elektrische Verbindungselement 21 jeweils drei Rasterpositionen vor der Befestigungsposition der Versorgungskanaleinheit 15. Im dargestellten Beispiel in Fig. 2 befindet sich das erste Verbindungselement an einer Rasterposition Nr. 4 gekennzeichnet mit C (C = A - 3). Das zweite Versorgungselement 21 befindet sich an einer Rasterposition Nr. 31 gekennzeichnet mit D (D = B - 3).

Die finale Verdrahtung der Gepäckablageeinheit 13 und eventuell der Versorgungskanaleinheit 15 kann sich ebenfalls implizit durch die vorgegebene Rasterposition C, D des elektrischen Verbindungselements an der Rasterschiene 11 definieren und ist in dem Verdrahtungsplan 7 angegeben. Der Vorverdrahtungsplan 7 kann ferner beispielsweise auch die Rasterposition einer Sauerstoffbox 17 an der Rasterschiene 11 unter der Gepäckablageeinheit 13 angeben.

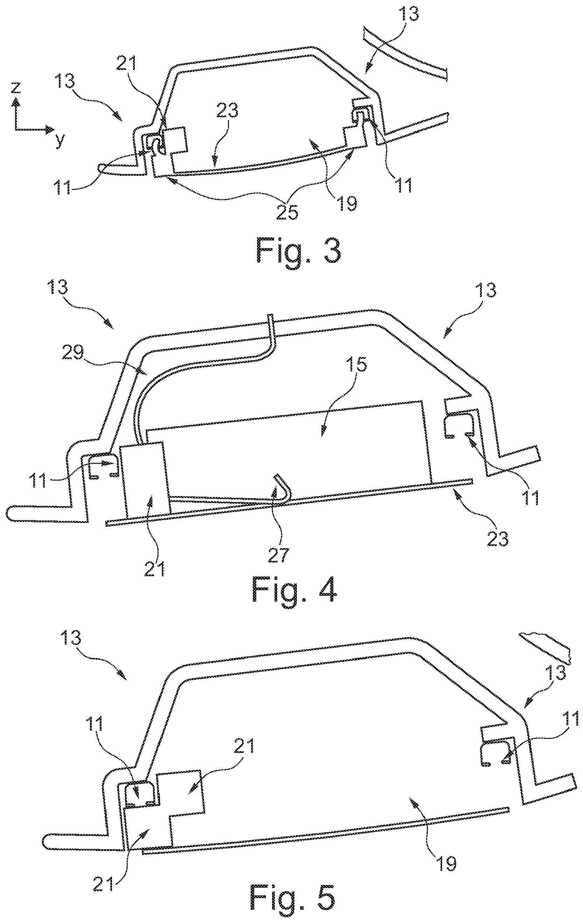

In Fig. 3 ist schematisch ein Querschnitt durch erfindungsgemäß installierte Versorgungskanaleinheiten 15 und Gepäckablageeinheiten 13 mit einer Rasterschiene 11 dargestellt.

Der Querschnitt ist in der z-y-Ebene gezeigt. Unter bzw. zwischen Gepäckablageeinheiten 13 befindet sich der Versorgungskanal 19. In diesem können Versorgungskanaleinheiten 15 untergebracht werden. Diese können durch ein Versorgungskanalpanel 23 abgedeckt werden. In Fig. 3 ist die mechanische Verbindung zwischen dem Versorgungskanalpanel 23 bzw. einer Versorgungskanaleinheit 15 und der Rasterschiene 11 dargestellt.

Die Rasterschiene 11 ist an bzw. unterhalb der Gepäckablageeinheiten 13 jeweils angeordnet. Darin kann eine mechanische Verbindungseinheit 25 wie beispielsweise eine Klemme oder Schraube einrasten bzw. eingehängt werden. Dies kann beispielsweise durch Hinführen einer Versorgungskanaleinheit 15 bzw. eines Versorgungskanalpanels 23 von unten an die Rasterschiene 11 geschehen.

Ein elektrisches Verbindungselement 21 kann ebenfalls automatisch an der Rasterschiene 11 einrasten. Dies kann beispielsweise ebenfalls beim Hinführen der Versorgungskanaleinheit 15 an die Rasterschiene 11 geschehen. Das elektrische Verbindungselement 21 kann seitlich an der Rasterschiene 11 angeordnet sein. Das elektrische Verbindungselement 21 kann ferner einen Versatz sowohl in y- als auch in x-Richtung gegenüber der mechanischen Verbindungseinheit 25 aufweisen.

In Fig. 4 ist schematisch die Verdrahtung erfindungsgemäß installierter Versorgungseinheiten 15 und Gepäckablageeinheiten 13 dargestellt. Mechanische Verbindungseinheiten 25 sind in Fig. 4 nicht dargestellt.

Seitlich an der Rasterschiene 11 ist das elektrische Verbindungselement 21 eingerastet. Das elektrische Verbindungselement 21 kann vor der Installation entweder komplett an der Versorgungskanaleinheit 15 angeordnet sein, nur als Steckelement an der Versorgungskanaleinheit 15 angeordnet sein und als weiteres Buchseelement seitlich der Rasterschiene 11 befestigt sein oder komplett bereits vor der Installation in der Gepäckablageeinheit 13 mittels der Rasterschiene 11 angeordnet sein. Vorzugsweise ist das elektrische Verbindungselement 21 vor der Installation komplett an der Versorgungskanaleinheit 15 angeordnet und rastet automatisch während dem Bewegen der Versorgungskanaleinheit 15 auf die vordefinierte standardisierte Einbauposition an der Rasterschiene 11 ein und stellt somit den elektrischen Kontakt eines elektrischen Verbrauchers in der Versorgungskanaleinheit 15 zu einer Versorgungsleitung des Luftfahrzeugs her.

Eine elektrische Versorgungsleitung des Luftfahrzeugs kann über einen Draht 29 in der Gepäckablageeinheit 13 mit dem elektrischen Verbindungselement 21 in Verbindung stehen. Die Versorgungskanaleinheit 15 steht mit dem elektrischen Verbindungselement 21 über einen Draht 27 elektrisch in Kontakt.

In Fig. 5 ist schematisch die alternative Anordnung des elektrischen Verbindungselementes 21 zwischen der Versorgungskanaleinheit 15 und einer Versorgungsleitung über die Gepäckablageeinheit 13 dargestellt. Das elektrische Verbindungselement 21 kann dabei beispielsweise seitlich der Rasterschiene 11 angeordnet sein. Alternativ kann das elektrische Verbindungselement 21 unterhalb der Rasterschiene 11 angeordnet sein.

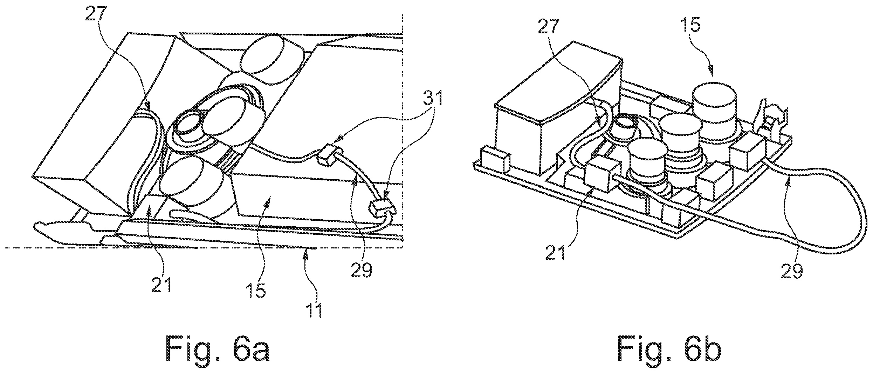

In den Fig. 6A und 6B ist schematisch ein Ausführungsbeispiel einer erfindungsgemäßen Verdrahtung des Versorgungskanals dargestellt. Dabei zeigt Fig. 6A die Vorverdrahtung mit einer Umgebungsgeometrie und Fig. 6B ohne die Umgebungsgeometrie.

In den Fig. 6A und 6B ist jeweils die Verdrahtung zwischen der Versorgungskanaleinheit 15, dem elektrischen Verbindungselement 21 und der Gepäckablageeinheit 13 dargestellt. Draht 27 stellt eine Verbindung zwischen dem elektrischen Verbindungselement 21 und der Versorgungskanaleinheit 15 dar. Draht 27 weist dabei keine bis eine sehr geringe Drahtüberlänge auf.

Draht 29 stellt eine Verbindung zwischen dem elektrischen Verbindungselement 21 und der Gepäckablageeinheit 13 dar. Vor der erfindungsgemäßen Installation weist der Draht 29 an der Gepäckablageeinheit 13 eine Überlänge auf. Im Verlauf der Installation wird Draht 29 mit Kabelklemmen 31 beispielsweise gemäß Verdrahtungsplan 7 außerhalb 3 des Luftfahrzeugs befestigt. Das Verbindungselement 21 ist in diesem Ausführungsbeispiel mittels einer Steckverbindung an der Rasterschiene 11 angeordnet.

Abschließend wird angemerkt, dass Ausdrücke wie "aufweisend" oder ähnliche nicht ausschließen sollen, dass weitere Elemente oder Schritte vorgesehen sein können. Des Weiteren sei daraufhingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

### BEZUGSZEICHENLISTE

- S1: Bereitstellen von Gepäckablageeinheiten mit Kabelüberlängen
- S2: Vorverdrahten der einzelnen Gepäckablageeinheiten und Versehen mit Verbindungselementen
- S3: Installieren der vorverdrahteten Gepäckablageeinheiten mit Verbindungselementen
- S4: Installieren der Versorgungskanaleinheiten an den Gepäckablageeinheiten

- 1: Inneres des Luftfahrzeugs
- 3: Außerhalb des Luftfahrzeugs
- 5: Versorgungskanal-Plotter-Plan
- 7: Verdrahtungsplan
- 9: Individuelle Gepäckablage-Installationszeichnungen
- 11: Rasterschiene
- 13: Gepäckablageeinheit (OHSC)
- 15: Versorgungskanaleinheit (PSU)
- 17: Sauerstoffbox
- 19: Versorgungskanal (PSC)
- 21: elektrisches Verbindungselement (Connector)
- 23: Versorgungskanal-Panel
- 25: mechanische Verbindungseinheit
- 27: Draht zwischen Versorgungskanaleinheit und elektrischem Verbindungselement
- 29: Draht zwischen elektrischem Versorgungselement und Gepäckablageeinheit
- 31: Kabelklemmen

- A: Rasterschienen Position der Befestigung der PSU
- B: Rasterschienen Position der Befestigung der PSU
- C: Rasterschienen Position des Verbindungselements
- D: Rasterschienen Position des Verbindungselements

## Patentansprüche

1. Verfahren zur Reduzierung der Installationszeit einer Versorgungskanaleinheit (15) mit einem elektrischen Verbraucher an einer Gepäckablageeinheit (13) in einem
Luftfahrzeug, das Verfahren aufweisend die folgenden Schritte:
Vorverdrahten der Gepäckablageeinheit (13) außerhalb des Luftfahrzeugs (S2), wobei die Gepäckablageeinheit (13) eine erste Haltestruktur (11) mit einer Rasterschiene aufweist,
wobei das Vorverdrahten das Herstellen, Anordnen
und Befestigen elektrischer Leitungen umfasst;
Installieren der vorverdrahteten Gepäckablageeinheit (13) im Luftfahrzeug (S3);
Installieren der Versorgungskanaleinheit (15) im Luftfahrzeug an einer durch die Rasterschiene (11) vordefinierten, standardisierten Einbauposition (S4);
Automatisches Herstellen einer elektrischen Verbindung zwischen dem elektrischen Verbraucher und einer Versorgungsleitung des Luftfahrzeugs mittels eines elektrischen Verbindungselements (21), das seitlich an der Rasterschiene oder unterhalb der Rasterschiene angeordnet ist, während einem Bewegen der Versorgungskanaleinheit auf die Einbauposition.

2. Verfahren gemäß Anspruch 1,
wobei die Rasterschiene eine Perforierung aufweist;
wobei das Installieren an der durch die Rasterschiene vordefinierten, standardisierten Einbauposition mittels der Perforierung der Rasterschiene erfolgt.

3. Verfahren gemäß Anspruch 2,
wobei die Perforierung eine Lochung mit gleichem Abstand entlang der Längsachse der Rasterschiene aufweist.

4. Verfahren gemäß einem der Ansprüche 1 und 3,
wobei die Vorverdrahtung der Gepäckablageeinheit (13) standardisiert ist.

5. Verfahren gemäß einem der Ansprüche 1 bis 4, ferner aufweisend:
Herstellen einer mechanischen Verbindung automatisch zwischen der Versorgungskanaleinheit (15) und der ersten Haltestruktur (11) während dem Bewegen der Versorgungskanaleinheit (15) auf die vordefinierte, standardisierte Einbauposition.

6. Verfahren gemäß einem der Ansprüche 1 bis 5, ferner aufweisend:
Bereitstellen einer elektrischen Steckverbindung (21) an der Versorgungskanaleinheit (15) zum elektrischen Anschluss der Versorgungskanaleinheit (15) an eine Versorgungsleitung des Luftfahrzeugs.

7. Verfahren gemäß einem der Ansprüche 1 bis 6, wobei die Versorgungskanaleinheit (15) eine Zuführung für sauerstoffhaltige Luft für einen Passagier aufweist;
das Verfahren ferner aufweisend:
Herstellen einer Sauerstoffversorgungs-Verbindung automatisch zwischen der Zuführung für sauerstoffhaltige Luft und einer entsprechenden Versorgungsleitung des Luftfahrzeugs während dem Bewegen der Versorgungskanaleinheit (15) auf die vordefinierte, standardisierte Einbauposition.

8. Verfahren gemäß einem der Ansprüche 1 bis 7, ferner aufweisend:
Installieren der Gepäckablageeinheit im Luftfahrzeug (S3) an einem durch eine zweite Haltestruktur vordefinierten, standardisierten Einbauort.

9. Verfahren gemäß Anspruch 8, ferner aufweisend:
Installieren der Versorgungskanaleinheit (15) an der Gepäckablageeinheit (13);
wobei die erste Haltestruktur (11) an der Gepäckablageeinheit (13) angeordnet ist.

10. Luftfahrzeug mit Kabinenbauteilen, die entsprechend dem Verfahren gemäß einem der Ansprüche 1 bis 9 installiert sind.

## Claims

1. Method for reducing the installation time of a supply duct unit (15) with an electrical consumer on a luggage storage unit (13) in an aircraft, the method comprising the following steps:
Pre-wiring the luggage storage unit (13) outside the
aircraft (S2), wherein the luggage storage unit (13) has a first holding structure (11) having a grid rail,
wherein the pre-wiring comprises the manufacturing, arranging and attaching of electrical lines;
Installing the pre-wired luggage storage unit (13) in the
aircraft (S3);
Installing of the supply duct unit (15) in the aircraft at a by the grid rail (11) predefined, standardized mounting position (S4);
Making automatically an electrical connection between the electrical consumer and a supply line of the aircraft by means of an electrical connection element (21) arranged laterally on the grid rail or below the grid rails, during movement of the supply duct unit to the installation position.

2. Method according to claim 1, wherein the grid rail has a perforation; wherein the installation take place at the by the grid rail (11) predefined, standardized mounting position (S4) by means of the perforation of the mounting rail.

3. Method according to claim 2, wherein the perforation is a hole of the same distance along the longitudinal axis of the grid rail.

4. Method according to one of claims 1 and 3, wherein the pre-wiring of the luggage storage unit (13) is standardized.

5. The method of any one of claims 1 to 4, further comprising:
Making automatically a mechanical connection between the supply duct unit (15) and the first support structure (11) while moving the supply duct unit (15) to the predefined, standardized mounting position.

6. The method of any one of claims 1 to 5, further comprising:
Providing an electrical connector (21) on the supply duct unit (15) for the electrical connection of supply duct unit (15) to a supply line of the aircraft.

7. Method according to one of claims 1 to 6,
wherein the supply duct unit (15) comprises a supply for oxygen-containing air for a passenger; the method further comprising:
Making automatically an oxygen supply connection between the oxygen-containing air supply and a corresponding supply line of the aircraft while moving the supply duct unit (15) to the predefined, standardized mounting position.

8. The method of any one of claims 1 to 7, further comprising:
Installing the luggage storage unit in the aircraft (S3) on a by a second support structure predefined, standardized mounting location.

9. The method of claim 8, further comprising:
Installing the supply duct unit (15) to the luggage storage unit (13);
wherein the first support structure (11) is arranged on the luggage storage unit (13).

10. Aircraft with cabin components that are installed according to the procedure according to one of claims 1 to 9.

## Revendications

1. Procédé pour réduire le temps d'installation d'une
unité de canal d'alimentation (15) à une charge électrique sur une unité de porte-bagages (13) dans un aéronef, le procédé comprenant les étapes consistant à:
Pré-câbler de l'unité de porte-bagages (13) à l'extérieur du aéronef (S2), dans lequel l'unité de porte-bagages (13) comprend une première structure de retenue (11)
avec un rail perforé,
dans lequel le pré-câblage de la production, la mise
et la fixation de câbles électriques comprennent:
Installer de l'unité de porte-bagages de précâblage (13) dans l'aéronef (S3);
Installer l'unité de canal d'alimentation (15) dans l'aéronef à une position de montage standardisé (S4) qui est pré-définie par le rail perforé (11) pré-définie;
Etablir automatiquement une connexion électrique entre la charge électrique et une ligne d'alimentation de l'aéronef au moyen d'un élément de connexion électrique (21), qui est arrangé sur le coté du rail perforé ou au-dessous du rail perforé, lors d'un mouvement de l'unité de canal d'alimentation à la position de montage.

2. Procédé selon la revendication 1,
dans lequel le rail perforé présente une perforation;
dans lequel l'installation à la position de montage standardisé est prédéfini par le rail perforé au moyen de la perforation du rail perforé.

3. Procédé selon la revendication 2,
dans lequel la perforation comprend une perforation équidistante le long de l'axe longitudinal du rail perforé.

4. Procédé selon l'une quelconque des revendications 1 et 3,
dans lequel le pré-câblage de l'unité de porte-bagages (13) est standardisé.

5. Procédé selon l'une quelconque des revendications 1 à 4, comprenant en outre:
Établir une liaison mécanique automatiquement entre l' unité de canal d'alimentation (15) et la première structure de retenue (11) au cours du déplacement de l'unité de canal d'alimentation (15) à la position de montage prédéfinie et standardisée.

6. Procédé selon l'une quelconque des revendications 1 à 5, comprenant en outre:
Fournir un connecteur électrique (21) sur l'unité de canal d'alimentation (15) pour la connexion électrique de l'unité de canal d'alimentation (15) à une ligne d'alimentation de l'aéronef.

7. Procédé selon l'une quelconque des revendications 1 à 6,
dans lequel l'unité de canal d'alimentation (15) comprend une alimentation pour de l'air contenant de l'oxygène à un passager; le procédé comprenant en outre:
Établir une liason d'alimentation en oxygène automatiquement entre l'alimentation pour l'air contenant de l'oxygène et une ligne d'alimentation correspondante de l'aeronef au cours du déplaçement de l' unité de canal d'alimentation (15) à la position de montage prédéfinie et standardisée.

8. Procédé selon l'une quelconque des revendications 1 à 7, comprenant en outre:
installer l'unité de porte-bagages dans l'aéronef (S3) à une position de montage qui est pré-définie et standardisé par une seconde structure de retenue.

9. Procédé selon la revendication 8, comprenant en outre:
Installer l'unité de canal d'alimentation (15) sur l'unité de porte-bagages (13);
dans lequel la première structure de retenue (11) est disposé sur l'unité de porte-bagages (13).

10. Aéronef avec des composants de la cabine qui sont installé selon l'une quelconque des revendications 1 à 9 selon le procédé.
